# EUROPÄISCHE PATENTSCHRIFT

(11) **EP 1 122 576 B1**
(45) Veröffentlichungstag und Bekanntmachung des Hinweises auf die Patenterteilung: **22.03.2006**
(21) Anmeldenummer: 01101318.2
(22) Anmeldetag: 20.01.2001
(51) Int. Cl.: G02B 21/34, G02B 21/08, G01N 21/25

(54) **Optisches System**
Optical system
Système optique

(30) Priorität: 28.01.2000 DE 10003789
(43) Veröffentlichungstag der Anmeldung: 08.08.2001
(73) Patentinhaber: Freber, Werner, Dipl.-Ing., 61184 Karben (DE)
(72) Erfinder: Freber, Werner, Dipl.-Ing., 61184 Karben (DE)
(74) Vertreter: Haar, Lucas Heinz Jörn

(56) Entgegenhaltungen:
- EP-A- 0 504 940
- WO-A-98/07022
- WO-A-98/28075
- DE-A- 3 734 691
- DE-A- 19 748 211
- US-A- 4 806 776
- US-A- 5 752 767

## Beschreibung

Die Erfindung betrifft ein optisches System mit einem vergrößernden Objektiv, das eine durchsichtige Mikrotiterplatte abbildet, die ein Analysepräparat in mehreren, becherförmigen Kavitäten aufnimmt, und mit einer objektivseitig der Mikrotiterplatte angeordneten Auflichtbeleuchtung zur Beleuchtung des von der Mikrotiterplatte aufgenommenen Analysepräparates.

Optische Systeme der angegebenen Art werden insbesondere zur Auswertung von Analysen nach dem ELISPOT (Enzyme Linked Immuno Spot Assay) verwendet. Dieses Verfahren wurde zum Nachweis von individuelle Antikörper abscheidenden β-Zellen entwickelt. Es findet auch Anwendung zum Nachweis von Zytokine-Ausscheidungen spezieller Untergruppen von Leukozyten oder T-Lymphozyten aus peripherem Blut wie auch von Monozyten und Granulozyten. Bei dem ELISPOT Verfahren werden von den Zellen abgeschiedene Proteine mit Antikörpern nachgewiesen und über spezielle Färbeverfahren punktförmige Flecken, sogenannte Spots erzeugt, die dauerhaft sind und sowohl visuell als auch bildanalytisch ausgewertet werden können. In der Laborroutine werden zur Durchführung von ELISPOT Analysen meist Mikrotiterplatten (MTP) verwendet, im Handel auch als Filterplatten oder Multiscreen-Platten bezeichnet. Die Mikrotiterplatten bestehen aus kleinen, miteinander verbundenen Bechern, auch Kavitäten oder Wells genannt. Der Boden der Becher wird in der Regel von einer Filtermembran gebildet, auf der die punktförmigen Analysenobjekte haften. Eine MTP-Standardgröße hat 96 Kavitäten. Zur Auswertung einer ELISPOT Analyse müssen die auf dem die Meßfläche bildenden Boden der Kavitäten einer MTP sichtbaren kleinen Punkte von bis zu 1.500 je Kavität gezählt werden. Hierzu werden automatisch arbeitende Auswertegeräte eingesetzt, die die Oberfläche des Bodens der einzelnen Kavitäten etwa 20 bis 40-fach vergrößert abbilden, mit einer elektronischen Kamera aufnehmen und die digitalisierten Bilddaten mit Hilfe eines elektronischen Rechners auswerten.

Bei der Abbildung und Auswertung der Mikrotiterplatten besteht das Problem, daß durch Reflexion außerhalb der Filtermembran ein Phantombild der Filtermembran entsteht, so daß die im Randbereich vorkommenden Spots doppelt erfaßt werden, was zu Fehlmessungen führt. Um dies zu vermeiden, könnte man die außerhalb der Kavität liegenden Bereiche mit einer kreisförmigen Maske ausblenden. Dies würde aber eine genaue Positionierung der einzelnen Kavitäten der Mikrotiterplatte zur optischen Achse erfordern, was sehr aufwendig und schwierig ist, da die Hersteller der Mikrotiterplatten keine absolut genaue Positionierung der Filtermembranen garantieren und die Justiergenauigkeit eines zur Positionierung erforderlichen XY-Tisches im Bereich von ca. 2µm liegen müßte. Seither wurde zur Lösung dieses Problems daher vorgeschlagen, die Filtermembranen von der MTP abzuziehen, auf eine Folie zu kleben und die aufgeklebten Filtermembranen dann optisch zu erfassen und auszuwerten. Durch die Trennung von der MTP ist die Entstehung eines Phantombildes durch Reflexion vermieden. Von Nachteil ist hierbei jedoch, daß für das Abziehen und Aufkleben ein zusätzlicher Arbeitsgang erforderlich ist, daß beim Ablösen der Filtermembranen die Position einzelner Membranen verrutschen kann und daß die Folien schlechter haltbar sind. Allerdings ist es jetzt mit bildanalytischen Mitteln leicht möglich, die Position der aufgeklebten Filtermembranen zu bestimmen und, soweit notwendig, mit Hilfe eines XY-Tisches in die Bildmitte zu fahren.

Bei einem anderen bekannten System der angegebenen Art wird zur Positionierung des vergrößernden Objektivs die MTP zunächst aus größerer Entfernung ohne nennenswerte Vergrößerung erfasst und an Hand dieses Bildes die genaue Position der einzelnen Kavitäten gemessen und gespeichert. Mit Hilfe der gespeicherten Werte kann dann das vergrößernde Objektiv automatisch über den einzelnen Kavitäten positioniert werden. Der Bauaufwand für das optische System und den Positioniertisch ist hierbei relativ hoch und zur Speicherung der Positionsdaten wird zusätzlicher Speicherraum benötigt.

Aus DE 197 48 211 A1 ist ein Mikroskop zu Fluoreszenz-, Lumineszenz- und Absorptionsuntersuchungen kleinster Probemengen bekannt, die in Mikrotiterplatten mit gerastert angeordneten Kleinstprobenbehältern bereitgestellt werden. Zur Abbildung der einzelnen Proben auf ein zur Detektion vorgesehenes CCD-Array ist eine übliche Optik mit einem Mini-Linsenarray kombiniert, das aus kleinen Linsen zusammengesetzt ist, die in dem gleichen Rastermaß wie die Probenbehälter der Mikrotiterplatte angeordnet sind. Zur Auflichtbeleuchtung gibt eine Beleuchtungseinrichtung Licht auf einen im Strahlengang angeordneten Einkoppelspiegel, das über das optische System des Mikroskops die Stellen auf der Mikrotiterplatte beleuchtet, die auf das CCD-Array abgebildet werden.

Aus EP 0 504 940 A2 ist eine Beleuchtungseinrichtung für ein System-Mikroskop mit einem Revolverobjektiv bekannt, bei der das Licht einer Lichtquelle objektivseitig über Lichtleitfasern ringförmig in Bezug auf die optische Achse über eine ringförmige Kondensorlinse und zugleich auf der objektivabgewandten Seite über ein Linsensystem, einen Umlenkspiegel und eine Kondensorlinse entlang der optischen Achse auf das zu betrachtende Objekt gerichtet wird. Eine Beobachtung von Mikrotiterplatten ist hierbei nicht vorgesehen.

Eine Beleuchtungsvorrichtung für ein Mikroskop mit einer Mehrzahl von flächig angeordneten Beleuchtungselementen, die individuell ansteuerbar sind und ein gewünschtes Beleuchtungsmuster für das zu untersuchende Objekt vorgeben, ist aus DE 37 34 691 C2 bekannt. Die als aktive Halbleiterquellen ausgebildeten Beleuchtungselemente sind als Durchlichtbeleuchtung hinter einer Diffusorscheibe angeordnet und können in ringförmiger Anordnung gezündet werden.

In der Druckschrift WO 98/07022 wird ein optisches System beschrieben, das entweder mit einer Auflicht- oder einer Durchlichtbeleuchtung betrieben wird. Die Durchlichtbeleuchtung wird mittels einer Platte mit einem Bündel in Richtung Präparat zeigenden Lichtleitern realisiert. Als Auflichtbeleuchtung wird ein Ring aus Lichtleitern verwendet.

Aufgabe der Erfindung ist es, ein optisches System der eingangs genannten Art zu schaffen, mit welchem die Meßflächen einer durchsichtigen MTP ohne die Bildauswertung störende Reflexionen abgebildet werden können.

Die Aufgabe wird erfindungsgemäß dadurch gelöst, daß die Auflichtbeleuchtung durch eine diffuse, konzentrisch zur optischen Achse angeordnete ringförmige Lichtquelle gebildet ist und daß auf der objektivabgewandten Seite der Mikrotiterplatte eine zweite im wesentlichen punktförmige und auf der optischen Achse liegende Lichtquelle vorhanden ist, welche das Analysepräparat mit Durchlicht und mit einer gegenüber der ringförmigen Lichtquelle höheren Leuchtdichte beleuchtet.

Durch die erfindungsgemäße Beleuchtung wird der außerhalb der Meßfläche der Filtermembran liegende Bereich der MTP völlig weiß abgebildet. Die präparierte Meßfläche hebt sich dagegen leicht grau vor diesem hellen Hintergrund ab. Reflexionen und Materialstörungen in dem außerhalb der auszuwertenden Meßfläche liegenden Bereich sind nicht mehr sichtbar. Durch Anordnung der annähernd punktförmigen Lichtquelle hinter einer Diffusorscheibe kann dieser Effekt verstärkt werden und der Kontrast zwischen Meßfläche und Hintergrund wird noch deutlicher. Zur Erhöhung der Leuchtdichte an der Meßfläche kann vorgesehen sein, daß das Licht der im wesentlichen punktförmigen Lichtquelle mit Hilfe reflektierender oder brechender Mittel auf die objektivabgewandte Seite der jeweils auf der optischen Achse liegenden Kavität der Mikrotiterplatte gebündelt wird. Weiterhin kann vorgesehen sein, daß die Lichtstärke der ringförmigen Lichtquelle zur Auflichtbeleuchtung und/oder der punktförmigen Lichtquelle zur Durchlichtbeleuchtung einstellbar ist. Hierdurch läßt sich die Abbildungsqualität des Optischen Systems an eine unterschiedliche Transparenz der Filtermembranen von Mikrotiterplatten anpassen.

Die objektivseitige Aufsichtbeleuchtung kann nach einem anderen Vorschlag der Erfindung auch durch Umlenkung von Licht, z.B. diffusem Streulicht, von der objektivabgewandten Seite auf die Objektivseite der Mikrotiterplatte erreicht werden. Die Umlenkung kann mit Hilfe von Reflektionsflächen oder lichtleitenden Elementen erfolgen, die im wesentlichen konzentrisch zur optischen Achse angeordnet sind.

Das erfindungsgemäße Optische System hat den Vorteil, daß sich die Meßflächen der Filtermembranen einer MTP fehlerfrei abbilden und auswerten lassen. Auch eine etwas ungenaue Zentrierung der Meßfläche zur optischen Achse beeinträchtigt die Meßgenauigkeit nicht, so daß die Anforderungen an die Positioniergenauigkeit des Tisches, der die MTP trägt und sich in X- und Y-Richtung bewegen kann, weniger hoch sein müssen und der Tisch entsprechend kostengünstiger hergestellt werden kann. Die deutliche Abhebung der Meßflächen von dem sie umgebenden hellen Hintergrund macht es weiterhin möglich, die Position der Meßflächen bildanalytisch zu bestimmen und durch Ansteuerung des Tisches automatisch in die Bildmitte zu bewegen. Eine automatische Auswertung von Mikrotiterplatten ist daher ohne weiteres möglich.

Die Erfindung wird nachfolgend anhand eines Ausführungsbeispiels näher erläutert, das in der Zeichnung dargestellt ist. Es zeigen
- Figur 1: einen Querschnitt durch die Kavität einer MTP mit dem abbildenden Strahlengang eines Objektivs,
- Figur 2: eine schematische Darstellung eines erfindungsgemäßen Mikroskops und
- Figur 3: eine schematische Darstellung einer anderen Ausführungsform eines erfindungsgemäßen Mikroskops.

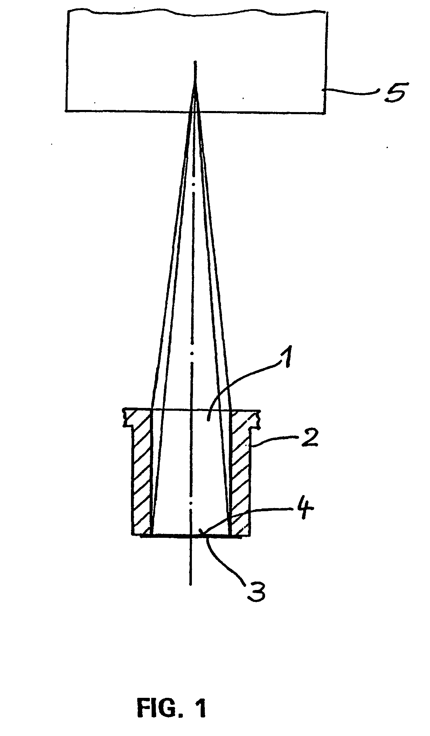

Figur 1 zeigt einen Querschnitt durch eine Kavität 1 einer handelsüblichen Mikrotiterplatte, wie sie für ELISPOT Analysen verwendet wird. Die Kavität 1 besteht aus einem zylindrischen Röhrchen 2, das aus einem durchsichtigen Kunststoff hergestellt ist. Die untere Öffnung des Röhrchens 2 ist durch eine an das Röhrchen 2 angeklebte Filtermembran 3 verschlossen, die den Boden der Kavität 1 bildet und durchscheinend ist. Die dem Hohlraum der Kavität 1 zugekehrte Oberfläche der Filtermembran 3 bildet die Meßfläche 4, auf der die punktförmigen Analysenobjekte haften.

Zur Auswertung einer ELISPOT Analyse wird die Meßfläche 4 mit Hilfe eines optischen Systems 5 vergrößert abgebildet und das vergrößerte Bild zur bildanalytischen Bearbeitung von einer elektronischen Kamera aufgenommen. Der in Figur 1 gezeigte Strahlengang veranschaulicht die von dem optischen System 5 abgebildeten Bereiche der Kavität 1. Hierbei wird deutlich, daß neben der Meßfläche 4 auch die zylindrische Wand der Kavität 1 als ein das Bild der Meßfläche 4 umgebender Kranz abgebildet wird. Spiegelungen der Meßfläche 4 der an der zylindrischen Wand der Kavität 1 können daher ebenfalls abgebildet werden und, da sie sich nur schwer von dem Bild der Meßfläche 4 unterscheiden lassen, zu Fehlern bei der Auswertung führen.

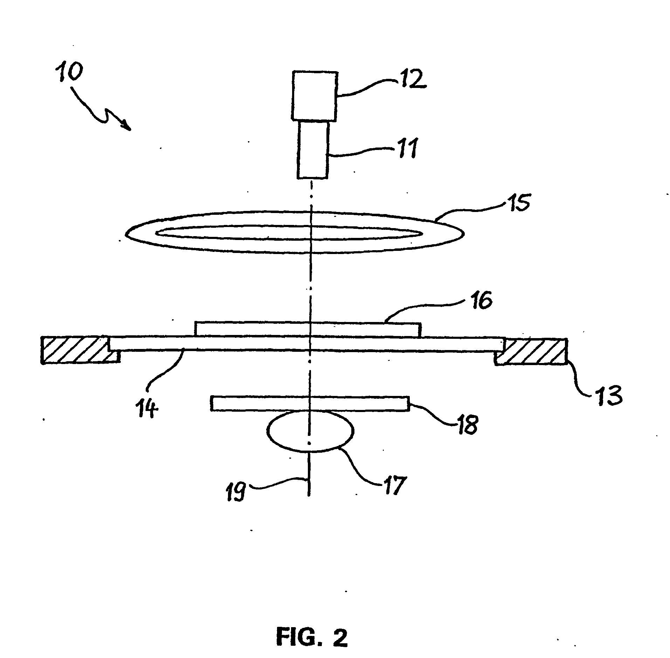

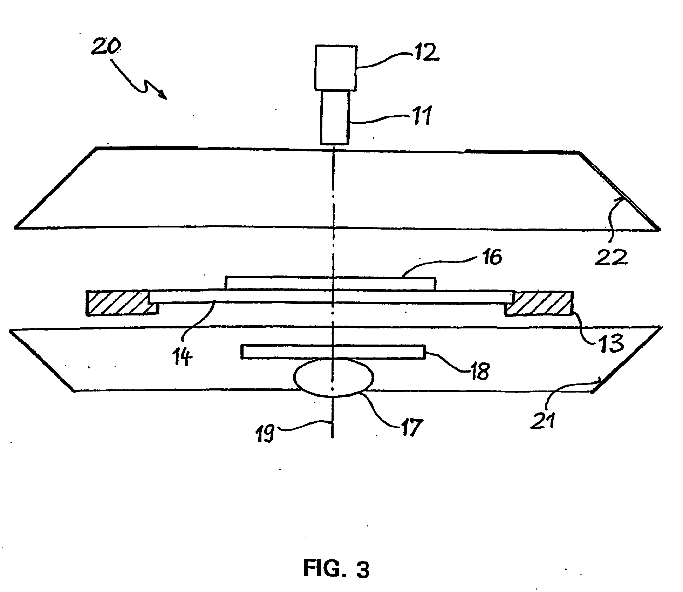

Figur 2 zeigt den Aufbau eines erfindungsgemäßen Mikroskops 10, mit welchem eine Abbildung des die Meßfläche umgebenden Wandbereichs einer Kavität verhindert werden kann. Das optische System 10 umfaßt ein vergrößerndes Objektiv 11 mit einer Kamera 12, die über einem in X- und Y-Richtung verfahrbaren Tisch 13 mit einer transparenten Trägerplatte 14 angeordnet sind. Weiterhin befindet sich über dem Tisch 13 eine ringförmige Lichtquelle 15, zum Beispiel eine LED-Diffusor-Lampe, mit der die auf der Trägerplatte 14 angeordnete Mikrotiterplatte 16 von oben beleuchtet wird. Unterhalb der Trägerplatte 14 des Tischs 13 ist eine punktförmige Lichtquelle 17 mit einer Diffusorscheibe 18 angeordnet. Die Lichtquelle 17 kann von mehreren eng beieinander angeordneten Leuchtdioden gebildet sein. Beide Lichtquellen 15 und 17 sind zur optischen Achse 19 des Objektivs 11 zentriert. Die Beleuchtungsdichte der Lichtquelle 17 ist deutlich größer als die der Lichtquelle 15. Bei der in Figur 3 gezeigten Ausgestaltung eines erfindungsgemäßen Mikroskops 20 wird die objektivseitige Auflichtbeleuchtung der Mikrotiterplatte 16 durch Umlenken von diffusem Streulicht bewirkt, welches die punktförmige Lichtquelle 17 auf der objektivabgewandten Seite der Mikrotiterplatte 16 erzeugt. Hierzu sind sowohl unterhalb als auch oberhalb des Tisches 13 ringförmige Reflektionsflächen 21, 22 vorgesehen, die eine diffus reflektierende Oberfläche haben und Streulicht aus der Durchlichtbeleuchtung der Lichtquelle 17 so ablenken, daß eine diffuse, homogene Beleuchtung der dem Objektiv 11 zugewandten Seite der Mikrotiterplatte 16 im Bereich der abgebildeten Meßfläche erzielt wird. Über dem zuvor beschriebenen Ausführungsbeispiel ist die Leuchtdichte des auflichtbeleuchtungumgelenkten Streulichts erheblich geringer als die im Durchlicht auf das Analysenpräparat gerichtete Leuchtdichte der Lichtquelle 17, wobei in analoger Weise eine Abbildung des Wandbereichs der von dem Objektiv erfaßten Kavität vermieden ist.

## Patentansprüche

1. Optisches System mit einem vergrößernden Objektiv, das eine durchsichtige Mikrotiterplatte (16) abbildet, die ein Analysepräparat in mehreren, becherförmigen Kavitäten (1) aufnimmt, und mit einer objektivseitig der Mikrotiterplatte (16) angeordneten Auflichtbeleuchtung zur Beleuchtung des von der Mikrotiterplatte (16) aufgenommenen Analysepräparates, wobei die Auflichtbeleuchtung durch eine diffuse, konzentrisch zur optischen Achse (19) angeordnete ringförmige Lichtquelle (15) gebildet ist und wobei auf der objektivabgewandten Seite der Mikrotiterplatte (16) eine zweite im wesentlichen punktförmige und auf der optischen Achse (19) liegende Lichtquelle (17) vorgesehen ist, **dadurch gekennzeichnet, dass** das optische System das Analysepräparat mit der Auflichtbeleuchtung und gleichzeitig mit Durchlicht mit einer gegenüber der ringförmigen Lichtquelle (15) höheren Leuchtdichte beleuchtet.

2. Optisches System nach Anspruch 1, **dadurch gekennzeichnet, daß** die punktförmige Lichtquelle (17) hinter einer Diffusorscheibe (18) angeordnet ist und das Analysepräparat diffus beleuchtet.

3. Optisches System nach einem der Ansprüche 1 oder 2, **dadurch gekennzeichnet, daß** das Licht der im wesentlichen punktförmigen Lichtquelle (17) mit Hilfe reflektierender oder brechender Mittel auf die objektivabgewandte Seite einer auf der optischen Achse liegenden Kavität der Mikrotiterplatte (16) gebündelt wird.

4. Optisches System nach einem der vorgehenden Ansprüche, **dadurch gekennzeichnet daß** die Leuchtdichte einer oder beider Lichtquellen (15, 17) einstellbar ist.

5. Optisches System nach Anspruch 1, **dadurch gekennzeichnet, daß** die Auflichtbeleuchtung durch Umlenkung von Licht von der objektivabgewandten Seite auf die objektivzugewandte Seite der Mikrotiterplatte (16) bewirkt wird.

## Claims

1. An optical system with a magnifying objective which images a transparent microtiter plate (16) receiving a preparation to be assayed in a plurality of cup-shaped wells (1), and with an incidence illuminator arranged on the objective proximal side of the microtiter plate (16) for illumination of the preparation, subject to assay, stored in the microtiter plate (16), said incidence illuminator being formed by an annular diffuse light source (15) arranged concentrically with the optical axis (19), and provision being made, on the objective distal side of the microtiter plate (16), for a second, essentially point-shaped light source (17) lying on said optical axis (19), **characterized in that** the optical system illuminates the preparation subject to assay with incident light and at the same time with transmitted light having a luminance exceeding that of the annular light source (15).

2. The optical system as claimed in claim 1, **characterized in that** the point-shaped light source (17) is arranged behind a diffuser disk (18) and illuminates the preparation subject to assay diffusely.

3. The optical system as claimed in any one of the claims 1 or 2, **characterized in that** the light emitting from the essentially point-shaped light source (17) is focused by means of reflecting or refracting devices onto the objective distal side of a well of the microtiter plate (16) that lies on the optical axis.

4. The optical system as claimed in any one of the preceding claims, **characterized in that** the luminance of one or both light sources (15, 17) is adjustable.

5. The optical system as claimed in claim 1, **characterized in that** incidence illumination is effected by deflecting light from the objective distal side to the objective proximal side of the microtiter plate (16).

## Revendications

1. Système optique avec un objectif grossissant qui forme une plaque de microtitration (16) transparente qui reçoit une préparation à analyser dans plusieurs cavités (1) en forme de godet, et avec une illumination par lumière incidente disposée du côté de la plaque de microtitration orienté vers l'objectif afin d'éclairer la préparation à analyser reçue par la plaque de microtitration, l'illumination par lumière incidente étant formée par une source lumineuse (15) diffuse annulaire disposée concentriquement à l'axe optique (1), et une seconde source lumineuse (17) essentiellement ponctuelle et située sur l'axe optique (19) étant prévue du côté de la plaque de microtitration opposée à l'objectif, **caractérisé en ce que** le système optique éclaire la préparation à analyser avec l'illumination par lumière incidente et simultanément avec une lumière transmise avec une luminance plus élevée par rapport à la source de lumière (15) annulaire.

2. Système optique selon la revendication 1, **caractérisé en ce que** la source lumineuse ponctuelle est disposée derrière une plaque de diffuseur (18) et éclaire de façon diffuse la préparation à analyser.

3. Système optique selon l'une des revendication 1 ou 2, **caractérisé en ce que** la lumière de la source de lumière essentiellement ponctuelle (17) est focalisée sur le côté dirigé vers l'objectif d'une cavité de la plaque de microtitration (16) située sur l'axe optique à l'aide de moyens réfléchissants ou réfractifs.

4. Système optique selon l'une des revendications précédentes, **caractérisé en ce que** la luminance d'une ou des deux sources lumineuses (15, 17) peut être réglée.

5. Système optique selon la revendication 1, **caractérisé en ce que** l'illumination par lumière incidente est réalisée par déviation de la lumière depuis le côté de la plaque de microtitration (16) opposé à l'objectif de vers le côté orienté vers l'objectif.
